# EUROPÄISCHE PATENTSCHRIFT

(11) **EP 3 396 024 B1**
(45) Veröffentlichungstag und Bekanntmachung des Hinweises auf die Patenterteilung: **16.12.2020**
(21) Anmeldenummer: 18168349.1
(22) Anmeldetag: 19.04.2018
(51) Int. Cl.: C25B 1/04, C25B 15/02, C25B 15/08, C25D 21/12, C25D 21/18, H01M 8/04276, H01M 8/0438, H01M 8/04537, H01M 8/06

(54) **ELEKTROCHEMIEVORRICHTUNG UND VERFAHREN ZUM BETRIEB EINER ELEKTROCHEMIEVORRICHTUNG**
ELECTROCHEMICAL DEVICE AND METHOD FOR OPERATING SAME
DISPOSITIF ÉLECTROCHIMIQUE ET PROCÉDÉ DE FONCTIONNEMENT D'UN DISPOSITIF ÉLECTROCHIMIQUE

(30) Priorität: 20.04.2017 DE 102017108427
(43) Veröffentlichungstag der Anmeldung: 31.10.2018
(73) Patentinhaber: H-TEC Systems GmbH, 23562 Lübeck (DE)
(72) Erfinder: ALLEBROD, Frank, 23552 Lübeck (DE); JÜRGENSEN, Lars, 25785 Nordhastedt (DE); BÜLOW, Norbert, 23560 Lübeck (DE); HERRMANN, Joachim, 89420 Diedorf (DE)
(74) Vertreter: Daub, Thomas

(56) Entgegenhaltungen:
- DE-A1- 2 214 920
- JP-A- 2004 277 808
- US-A1- 2002 017 463
- US-A1- 2016 068 975
- Anonymous: "Hydrogen is now", Pressemitteilung, 21. April 2017 (2017-04-21), XP055503500, Gefunden im Internet: URL:https://www.h-tec-systems.com/fileadmi n/Content/News/Pressemitteilungen/21042017 Pressemitteilung_HTEC_SYSTEMS.pdf [gefunden am 2018-08-30]

## Beschreibung

### Stand der Technik

Die Erfindung betrifft eine Elektrochemievorrichtung nach dem Oberbegriff des Anspruchs 1 sowie ein Verfahren zum Betrieb einer Elektrochemievorrichtung nach dem Oberbegriff des Anspruchs 10.

Aus den Druckschriften US 2016/0068975 A1, US 2002/017463 A1, JP 2004 277808 A und DE 22 14 920 A1 sind Elektrolyseure bekannt, die eine Wasserversorgung mit einer Fluidqualitätseinheit aufweisen, welche zu einer Aufbereitung des Wassers vorgesehen ist, und welche in einer Flussrichtung vor einem Elektrolyse-Stack des Elektrolyseurs angeordnet ist. Insbesondere weisen die Elektrolyseure der Druckschriften US 2016/0068975 A1, JP 2004 277808 A und DE 22 14 920 A1 zur Wasserversorgung einen Wasserkreislauf mit einem Reservoir und mit Wasserfiltern auf, die Wasser des Reservoirs reinigen und das gereinigte Wasser einem Elektrolyse-Stack zuführen. Insbesondere Leitungskomponenten auf einer Wasserstoffseite des Elektrolyseurs haben dabei oftmals Edelstahlleitungen, die aufgrund eines Betriebs mit deionisiertem Wasser einer nicht vernachlässigbaren Korrosion ausgesetzt sind, durch welche Ionen in das Wasser geraten.

Die Aufgabe der Erfindung besteht insbesondere darin, vorteilhafte Eigenschaften hinsichtlich einer Zuverlässigkeit und/oder eines Wirkungsgrads zu erzielen. Ferner besteht eine Aufgabe der Erfindung insbesondere darin, vorteilhafte Eigenschaften hinsichtlich einer hohen Fluidqualität zu erzielen. Außerdem besteht eine Aufgabe der Erfindung insbesondere darin, eine Wahrscheinlichkeit für Beschädigungen und/oder Ausfälle zu reduzieren. Die Aufgabe wird erfindungsgemäß durch die Merkmale der Ansprüche 1 und 10 gelöst, während vorteilhafte Ausgestaltungen und Weiterbildungen der Erfindung den Unteransprüchen entnommen werden können.

### Vorteile der Erfindung

Die Erfindung geht aus von einer Elektrochemievorrichtung, insbesondere einer Elektrolysevorrichtung, insbesondere einer Polymerelektrolytmembran-Elektrolysevorrichtung, mit zumindest einer Zelleneinheit, die zumindest eine elektrochemische Zelle umfasst, und mit zumindest einer Fluidversorgung zur Versorgung der Zelleneinheit mit zumindest einem in zumindest eine Flussrichtung fließenden Fluid.

Es wird vorgeschlagen, dass die Fluidversorgung zumindest eine Fluidqualitätseinheit aufweist, die zu einer Aufbereitung des Fluids vorgesehen ist und die in Flussrichtung vor der Zelleneinheit zumindest teilweise, insbesondere vollständig, in einem Nahbereich der Zelleneinheit angeordnet ist.

Durch die erfindungsgemäße Ausgestaltung kann vorteilhaft eine hohe Zuverlässigkeit erzielt werden. Zudem kann ein, insbesondere dauerhaft abrufbarer, vorteilhaft hoher Wirkungsgrad erzielt werden. Weiterhin kann eine Qualität eines Versorgungsfluids, insbesondere eines Wassers einer Wasserversorgung, für eine Elektrochemievorrichtung in vorteilhafter Weise erhöht werden. Insbesondere können Ausfälle und/oder Beschädigungen und/oder Leistungseinbußen oder dergleichen, beispielsweise aufgrund von Verschmutzungen und/oder Korrosion und/oder Akkumulation schwer löslicher Salze oder dergleichen vermieden werden. Vorzugsweise kann eine Elektrochemievorrichtung bereitgestellt werden, die im Fall plötzlich und/oder unvorhergesehen auftretender Verschmutzungen sicher und/oder beschädigungsfrei weiterbetrieben werden kann. Zudem kann eine hohe Zuverlässigkeit hinsichtlich einer Betriebszustandsüberwachung erzielt werden. Außerdem können vorteilhaft Verschmutzungen, die aufgrund eines länger andauernden Ruhemodus einer Elektrochemievorrichtung auftreten können, insbesondere eines Elektrolysestacks, vermieden werden.

Unter einer "Elektrochemievorrichtung" soll insbesondere zumindest ein, vorzugsweise funktionsfähiger, Teil eines Geräts und/oder einer Maschine, insbesondere eines Elektrolyseurs, verstanden werden, die zur Durchführung zumindest eines zumindest teilweise elektrochemischen Arbeitsschritts vorgesehen ist. Insbesondere kann die Elektrochemievorrichtung auch das gesamte Gerät und/oder die gesamte Maschine umfassen. Vorzugsweise ist die Elektrochemievorrichtung dazu vorgesehen, elektrische Energie in chemische Bindungsenergie und/oder chemische Bindungsenergie in elektrische Energie umzuwandeln. Insbesondere läuft in dem Normalbetriebszustand zumindest eine chemische Reaktion ab, die mit einem elektrischen Strom verknüpft ist, insbesondere eine Redox-Reaktion. Beispielsweise kann die Elektrochemievorrichtung eine Brennstoffzellenvorrichtung, eine Batterievorrichtung, eine Messgerätevorrichtung, eine Generatorvorrichtung, eine Analysevorrichtung, eine Elektrodepositionsvorrichtung, eine Anodisierungsvorrichtung, eine Galvanisierungsvorrichtung, eine Redoxreaktorvorrichtung oder dergleichen umfassen. Vorzugsweise ist die Elektrochemievorrichtung als eine Elektrolysevorrichtung ausgebildet, besonders bevorzugt als eine Wasserstoffelektrolysevorrichtung, die insbesondere zur elektrochemischen Spaltung von Wasser in Wasserstoff und Sauerstoff vorgesehen ist. Die Elektrochemievorrichtung kann dazu vorgesehen sein, zumindest ein Gas, insbesondere Wasserstoff, mit einem Überdruck gegenüber einer Umgebung bereitzustellen, insbesondere mit einem Druck von wenigstens 1 bar, wobei auch Drücke von wenigstens 5 bar, wenigstens 10 bar, wenigstens 15 bar, wenigstens 20 bar, wenigstens 30 bar oder noch größere Drücke denkbar sind. Insbesondere kann die Elektrochemievorrichtung zu einer Verbindung mit einem Gasbehälter, insbesondere einem Wasserstofftank, vorgesehen sein, wobei denkbar ist, dass ein Betriebsdruck der Elektrochemievorrichtung an einen Füllstand des Gasbehälters anpassbar und/oder angepasst ist. Beispielsweise ist denkbar, dass die Elektrochemievorrichtung das Gas gegen einen Fülldruck des Gasbehälters erzeugt und diesen insbesondere ohne Verwendung eines Kompressors oder dergleichen befüllt. Alternativ ist auch denkbar, dass die Elektrochemievorrichtung zumindest im Wesentlichen frei von einem Überdruck betrieben wird. Ferner ist denkbar, dass die Elektrochemievorrichtung bei einem konstanten Druck betreibbar ist und/oder in dem Normalbetriebszustand mit einem konstanten Arbeitsdruck betrieben ist. Insbesondere in diesem Fall ist eine Kombination mit einem Kompressor denkbar. Zudem kann die Elektrochemievorrichtung eine Hochdruckelektrolysevorrichtung und insbesondere dazu vorgesehen sein, zumindest ein Gas, insbesondere Wasserstoff, mit einem Druck von wenigstens 50 bar, vorzugsweise von wenigstens 70 bar und besonders bevorzugt von wenigstens 100 bar oder noch mehr zu erzeugen und/oder bereitzustellen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs-und/oder Betriebszustand erfüllt und/oder ausführt.

Unter einer "elektrochemischen Zelle" soll insbesondere eine funktionelle Einheit verstanden werden, mittels derer zumindest eine elektrochemische Reaktion durchführbar ist, insbesondere eine elektrochemische Reaktion der Art, für deren Durchführung die Elektrochemievorrichtung vorgesehen ist. Beispielsweise kann die elektrochemische Zelle eine Brennstoffzelle, eine Batteriezelle, eine Messzelle, eine Redoxzelle oder dergleichen sein. Vorteilhaft ist die elektrochemische Zelle eine Elektrolysezelle. Besonders vorteilhaft ist die elektrochemische Zelle eine Zellenstapel-kompatible Elektrolysezelle, insbesondere eines Elektrolyse-Zellenstapels. Vorteilhaft umfasst die elektrochemische Zelle zumindest eine Anode, an welcher in dem Normalbetriebszustand vorzugsweise Sauerstoff gebildet wird. Vorzugsweise umfasst die elektrochemische Zelle zumindest eine Kathode, an welcher in dem Normalbetriebszustand bevorzugt Wasserstoff gebildet wird. Vorteilhaft umfasst die elektrochemische Zelle zumindest eine Membran, insbesondere eine vorteilhaft selektiv protonenleitende Membran, bevorzugt eine Polymerelektrolytmembran. Besonders bevorzugt sind die Anode und die Kathode zumindest durch die Membran voneinander getrennt. Insbesondere ist die Anode und/oder die Kathode flächig und/oder schichtartig und/oder eine Schicht und/oder Beschichtung. Vorzugsweise ist die Membran zumindest teilweise und besonders bevorzugt zu wenigstens einem Großteil aus Nafion ausgebildet. Vorzugsweise umfasst die elektrochemische Zelle zumindest ein funktionelles Element, insbesondere ein bipolares Element, vorzugsweise eine Bipolarplatte. Insbesondere bildet eine erste Seite des bipolaren Elements eine Anodenseite einer elektrochemischen Zelle und insbesondere eine zweite Seite des bipolaren Elements eine Kathodenseite einer unmittelbar benachbarten anderen elektrochemischen Zelle. Insbesondere kann die erste elektrochemische Zelle und/oder die zweite elektrochemische Zelle wie in diesem Zusammenhang beschrieben ausgebildet sein. Insbesondere sind wenigstens einige, vorteilhaft wenigstens ein Großteil und besonders vorteilhaft alle elektrochemischen Zellen der Zelleneinheit zumindest im Wesentlichen identisch ausgebildet und/oder von derselben und/oder einer analogen Bauart. Unter "zumindest im Wesentlichen identischen" Objekten sollen in diesem Zusammenhang insbesondere Objekte verstanden werden, die derart konstruiert sind, dass sie jeweils eine gemeinsame Funktion erfüllen können und sich in ihrer Konstruktion abgesehen von Fertigungstoleranzen höchstens durch einzelne Elemente unterscheiden, die für die gemeinsame Funktion unwesentlich sind, und vorteilhaft Objekte, die abgesehen von Fertigungstoleranzen und/oder im Rahmen fertigungstechnischer Möglichkeiten identisch ausgebildet sind, wobei unter identischen Objekten insbesondere auch zueinander symmetrische Objekte verstanden werden sollen. Unter dem Ausdruck "zu wenigstens einem Großteil" soll dabei insbesondere zu wenigstens 55 %, vorteilhaft zu wenigstens 65 %, vorzugsweise zu wenigstens 75 %, besonders bevorzugt zu wenigstens 85 % und besonders vorteilhaft zu wenigstens 95 %, insbesondere aber auch vollständig verstanden werden. Unter dem Ausdruck "wenigstens ein Großteil" sollen dabei insbesondere wenigstens 55 %, vorteilhaft wenigstens 65 %, vorzugsweise wenigstens 75 %, besonders bevorzugt wenigstens 85 % und besonders vorteilhaft wenigstens 95 %, insbesondere aber auch 100 % verstanden werden.

Vorzugsweise umfasst die Zelleneinheit eine Mehrzahl, bevorzugt eine Vielzahl, von, insbesondere zumindest im Wesentlichen identisch ausgebildeten, elektrochemischen Zellen. Vorteilhaft umfasst die Zelleneinheit zumindest einen Zellenstapel, insbesondere einen Elektrolyse-Stack, der eine Mehrzahl, vorzugsweise eine Vielzahl, gestapelt angeordneter elektrochemischer Zellen umfasst. Vorzugsweise umfasst der Zellenstapel zumindest die erste elektrochemische Zelle und/oder die zweite elektrochemische Zelle. Vorteilhaft sind die elektrochemischen Zellen des Zellenstapels zumindest im Wesentlichen identisch ausgebildet. Vorzugsweise weist der Zellenstapel Wiederholeinheiten auf, die mehrere unterschiedliche funktionelle Elemente, vorteilhaft unterschiedliche funktionelle Zellenstapelelemente, umfassen, beispielsweise, insbesondere in der angegebenen Reihenfolge, zumindest eine Bipolarplatte und/oder zumindest ein Siebblech und/oder Lochblech oder dergleichen und/oder zumindest eine Gasdiffusionsschicht, insbesondere eine Sauerstoffdiffusionsschicht, vorteilhaft ein Titanfilz und/oder eine Membran, vorteilhaft eine Polymerelektrolytmembran, und/oder eine weitere Gasdiffusionsschicht, insbesondere eine Wasserstoffdiffusionsschicht, vorteilhaft einen Kohlenstofffilz, und/oder einen, insbesondere ein weiteres Siebblech und/oder Lochblech umfassenden, Kompressionspuffer, insbesondere ein Compression Pad, vorteilhaft ein Streckmetall. Vorteilhaft ist eine Bipolarplatte und/oder ein Lochblech und/oder ein Siebblech und/oder ein Streckmetall und/oder ein anderes metallisches Zellenstapelelement zumindest teilweise, vorteilhaft zu wenigstens einem Großteil aus Titan und/oder aus Edelstahl und/oder aus zumindest einem beschichteten Metall ausgebildet. Insbesondere erstreckt sich jeweils eine elektrochemische Zelle von einer Bipolarplatte bis zu einer nächsten Bipolarplatte. Der Zellenstapel kann dabei eine beliebige Anzahl an elektrochemischen Zellen umfassen, beispielsweise zehn oder 20 oder 30 oder 50 oder 100 oder mehr oder weniger oder eine beliebige dazwischenliegende Anzahl. Vorteilhaft weist die Zelleneinheit genau einen Zellenstapel auf. Es ist jedoch auch denkbar, dass die Zelleneinheit mehrere, insbesondere zumindest im Wesentlichen identisch ausgebildete oder unterschiedlich ausgebildete Zellenstapel umfasst, von denen zumindest einige elektrisch und/oder hydraulisch in Reihe und/oder in Serie geschaltet sein können. Vorteilhaft sind die erste elektrochemische Zelle und die zweite elektrochemische Zelle in einem gemeinsamen Zellenstapel angeordnet. Es ist jedoch auch denkbar, dass die erste elektrochemische Zelle und die zweite elektrochemische Zelle in unterschiedlichen Zellenstapeln angeordnet sind.

Vorzugsweise weist die Zelleneinheit zumindest eine erste Endplatte und/oder zumindest eine zweite Endplatte auf. Besonders bevorzugt sind die elektrochemischen Zellen des Zellenstapels zwischen den Endplatten, insbesondere dicht gestapelt, angeordnet. Vorzugsweise sind die erste Endplatte und die zweite Endplatte miteinander verbunden. Besonders bevorzugt beaufschlagen die erste Endplatte und die zweite Endplatte den Zellenstapel von gegenüberliegenden Seiten und insbesondere in eine Richtung senkrecht und/oder zumindest im Wesentlichen senkrecht zu einer Stapelrichtung mit einer Druckkraft. Vorzugsweise entspricht die Stapelrichtung einer Richtung, in welcher der Zellenstapel aus elektrochemischen Zellen aufgebaut ist. Insbesondere verläuft die Stapelrichtung senkrecht und/oder zumindest im Wesentlichen senkrecht zu einer Haupterstreckungsebene der ersten elektrochemischen Zelle und/oder senkrecht zu einer Haupterstreckungsebene zumindest eines, insbesondere plattenförmigen, Zellenstapelelements. Vorzugsweise ist der Zellenstapel derart beschaffen, dass Haupterstreckungsebenen der elektrochemischen Zellen des Zellenstapels parallel zueinander und insbesondere senkrecht zu der Stapelrichtung angeordnet sind. Vorzugsweise liegt in dem Normalbetriebszustand eine Arbeitsspannung zwischen einer vordersten elektrochemischen Zelle, die insbesondere an der ersten Endplatte anliegt, und einer hintersten elektrochemischen Zelle, die insbesondere an der zweiten Endplatte anliegt, an. Insbesondere in dem Fall, dass die Elektrochemievorrichtung als eine Elektrolysevorrichtung ausgebildet ist, liegt vorteilhaft in dem Normalbetriebszustand an den elektrochemischen Zellen, insbesondere des Zellenstapels, jeweils eine Einzelarbeitsspannung von wenigstens 0,5 V, vorteilhaft von wenigstens 1 V, besonders vorteilhaft von wenigstens 1,2 V und vorzugsweise von wenigstens 1,5 V und/oder von höchstens 10 V, vorteilhaft von höchstens 5V, besonders vorteilhaft von höchstens 2,5 V und bevorzugt von höchstens 2 V an. Es ist aber, insbesondere für andere Fälle, beispielsweise für eine Brennstoffzellenvorrichtung, denkbar, dass in dem Normalbetriebszustand an den elektrochemischen Zellen, insbesondere des Zellenstapels, jeweils eine Einzelarbeitsspannung anliegt, die kleiner als 1 V ist oder auch kleiner als 0,5 V oder noch kleiner oder beispielsweise auch größer als 10 V oder größer als 20 V oder größer als 50 V oder noch größer ist. Ein Fachmann wird eine geeignete Einzelarbeitsspannung einer Anwendung entsprechend beliebig wählen. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft. Unter "zumindest im Wesentlichen senkrecht" soll hier insbesondere eine Ausrichtung einer Richtung relativ zu einer Bezugsrichtung, insbesondere in einer Bezugsebene, verstanden werden, wobei die Richtung und die Bezugsrichtung einen Winkel einschließen, der insbesondere weniger als 8°, vorteilhaft weniger als 5° und besonders vorteilhaft weniger als 2° von einem rechten Winkel abweicht.

Insbesondere ist die Fluidversorgung dazu vorgesehen, die elektrochemischen Zellen der Zelleneinheit, insbesondere die erste elektrochemische Zelle und/oder die zweite elektrochemische Zelle, mit zumindest einem Fluid, insbesondere mit Wasser, vorteilhaft mit deionisiertem Wasser, zu versorgen. Vorteilhaft ist die Fluidversorgung dazu vorgesehen, Wasser als Edukt einer elektrolytischen Wasserspaltung und/oder als Kühlmittel der Zelleneinheit und/oder dem Zellenstapel und/oder den elektrochemischen Zellen der Zelleneinheit zur Verfügung zu stellen. Vorzugsweise umfasst die Fluidversorgung wenigstens einen Fluidkreislauf, durch welchen besonders vorteilhaft in zumindest einem Normalbetriebszustand das Fluid zumindest zeitweise zirkuliert. Bevorzugt bildet die Zelleneinheit einen Teil des Fluidkreislaufs aus, sodass insbesondere das Fluid in dem Normalbetriebszustand zumindest abschnittsweise durch die Zelleneinheit zirkuliert. Insbesondere umfasst die Fluidversorgungseinheit zumindest eine Fluidpumpe und/oder zumindest ein Fluidreservoir, wobei auch eine Ausgestaltung ohne Fluidreservoir denkbar ist. Vorteilhaft ist die Fluidversorgung und insbesondere das Fluidreservoir dazu vorgesehen, vor einer Inbetriebnahme der Zelleneinheit mit dem Fluid befüllt zu werden, während zumindest in dem Normalbetriebszustand das Fluid insbesondere umgepumpt und/oder insbesondere zumindest mehrfach durch die Zelleneinheit geführt wird. Die Fluidversorgung der Elektrochemievorrichtung kann auch lediglich einen Teil eines vollständigen Fluidversorgungskreislaufs umfassen und beispielsweise entsprechende Anschlüsse zur Einbindung in einen Kreislauf aufweisen. Beispielsweise können ein Fluidreservoir und/oder eine Fluidpumpe und/oder zumindest Abschnitte geeigneter Fluidleitungen oder dergleichen getrennt von der Fluidversorgung ausgebildet und/oder mit dieser verbunden und/oder verbindbar sein.

Unter einem "Normalbetriebszustand" soll insbesondere ein Zustand verstanden werden, in welchem die Elektrochemievorrichtung und/oder die Zelleneinheit innerhalb ihrer spezifizierten Betriebsparameter und/oder fehlerfrei und/oder gemäß ihrem Verwendungszweck betrieben wird. Insbesondere umfasst der Normalbetriebszustand eine kontinuierliche Leistungsaufnahme und/oder -abgabe und/oder ein kontinuierliches Umsetzen von Reaktionsedukten und/oder Produkten, jeweils insbesondere mit einer zumindest im Wesentlichen konstanten Rate. Zudem kann der Normalbetriebszustand alternativ oder zusätzlich ein Hochfahren und/oder ein Herunterfahren und/oder ein, insbesondere gezieltes und/oder gesteuertes und/oder geregeltes, Umschalten von einem, insbesondere fehlerfreien, Betriebszustand in zumindest einen, insbesondere fehlerfreien, anderen Betriebszustand der Elektrochemievorrichtung und/oder der Zelleneinheit umfassen. Insbesondere kann die Elektrochemievorrichtung, insbesondere die Zelleneinheit und/oder die Fluidversorgung, vorzugsweise in dem Normalbetriebszustand, an zumindest eine Energieversorgung und/oder an zumindest eine externe Fluidversorgung, insbesondere eine Wasserleitung und/oder eine Gasleitung, angeschlossen sein.

Insbesondere entspricht die Flussrichtung einer Richtung, in welche das Fluid in dem Fluidkreislauf fließt, vorzugsweise umfließt. Insbesondere kann die Flussrichtung an unterschiedlichen Punkten der Fluidversorgung und/oder des Fluidkreislaufs in unterschiedliche Richtungen zeigen. Beispielsweise kann die Flussrichtung ein Vektorfeld sein. Vorzugsweise beschreibt die Flussrichtung zumindest eine geschlossene Trajektorie durch die Zelleneinheit. Insbesondere ist die Flussrichtung eine Richtung, in welche das Fluid durch Fluidleitungen und/oder Fluidleitungsabschnitte der Fluidversorgung und/oder der Zelleneinheit fließt. Vorzugsweise wird die Zelleneinheit in dem Normalbetriebszustand mittels der Fluideinheit mit dem Fluid, insbesondere kontinuierlich und/oder mit einem konstanten und/oder an einen jeweiligen Betriebszustand, beispielsweise in Abhängigkeit von einer Leistungsaufnahme, anpassbaren Gesamtfluss in Flussrichtung, durchspült. Vorzugsweise sind die Zelleneinheit, insbesondere der Zellenstapel, und die Fluidversorgung zumindest teilweise einteilig ausgebildet. Darunter, dass ein erstes Objekt und ein zweites Objekt "zumindest teilweise einteilig" ausgebildet sind, soll insbesondere verstanden werden, dass zumindest ein Element und/oder ein Teil des ersten Objekts und zumindest ein Element und/oder ein Teil des zweiten Objekts einteilig ausgebildet sind.

Unter einer "Aufbereitung eines Fluids" soll insbesondere ein, vorteilhaft von einem Zuführen und/oder einem Entziehen von Wärme und/oder von einer Änderung eines Fließzustands und/oder eines Drucks verschiedenes, Einwirken auf ein Fluid verstanden werden, welches zumindest einen Fluidparameter ändert. Vorzugsweise beinhaltet die Aufbereitung des Fluids zumindest eine Reinigung des Fluids, beispielsweise ein Filtern und/oder ein zumindest teilweise chemisches Aufreinigen oder dergleichen, und/oder zumindest ein Hinzufügen und/oder zumindest ein Entfernen zumindest eines Stoffs. Insbesondere kann die Aufbereitung des Fluids eine Entsalzung und/oder eine Enthärtung und/oder eine Entkeimung und/oder dergleichen beinhalten. Zudem ist denkbar, dass die Aufbereitung zumindest ein Einstellen zumindest eines Fluidparameters, beispielsweise eines pH-Werts und/oder einer Leitfähigkeit und/oder einer Konzentration bestimmter Stoffe oder dergleichen umfasst. Vorzugsweise umfasst die Aufbereitung des Fluids zumindest eine zumindest teilweise Entfernung zumindest einer lonenart und/oder deren zumindest teilweisen Austausch. Ferner kann die Aufbereitung des Fluids zumindest ein Herausfiltern von Partikeln und/oder Schwebstoffen oder dergleichen umfassen. Des Weiteren kann die Aufbereitung des Fluids beispielsweise ein Einwirken zumindest eines elektromagnetischen Felds und/oder eine Bestrahlung mit, insbesondere sichtbarem und/oder ultraviolettem und/oder infrarotem, Licht oder dergleichen beinhalten. Es ist denkbar, dass die Fluidqualitätseinheit zumindest eine Steuer- und/oder Regeleinheit aufweist, die zu einer Steuerung und/oder Regelung fluidaufbereitender Komponenten der Fluidqualitätseinheit vorgesehen ist. Vorteilhaft umfasst die Fluidqualitätseinheit zumindest eine Fluidaufbereitungskomponente. Insbesondere ist die Fluidaufbereitungskomponente dazu vorgesehen, zumindest einen Teil einer Aufbereitung des Fluids durchzuführen, insbesondere gemäß den beschriebenen Varianten. Beispielsweise kann die Fluidaufbereitungskomponente zumindest einen Filter und/oder zumindest einen lonentauscher und/oder zumindest eine Membran und/oder zumindest eine Bestrahlungs- und/oder Behandlungseinheit oder dergleichen aufweisen und/oder als solche ausgebildet sein. Vorteilhaft weist die Fluidqualitätseinheit eine Mehrzahl unterschiedlicher Fluidaufbereitungskomponenten auf, die insbesondere zur Verbesserung und/oder Aufrechterhaltung unterschiedlicher Fluidqualitätsparameter vorgesehen sein können oder diesen beispielsweise schrittweise anpassen, beispielsweise nach Art einer kaskadenartigen Filteranordnung oder dergleichen.

Unter einem "Nahbereich" soll im erfindungsgemäßen Zusammenhang insbesondere ein Bereich verstanden werden, dessen Punkte weniger als 3 m, vorzugsweise weniger als 2 m, vorteilhaft weniger als 1 m und besonders bevorzugt weniger als 0,5 m von der Zelleneinheit entfernt sind, insbesondere gemessen in Flussrichtung und/oder entlang eines Fluidflusspfads zu der Zelleneinheit. Darunter, dass die Fluidqualitätseinheit in dem Nahbereich der Zelleneinheit angeordnet ist, soll insbesondere verstanden werden, dass zumindest ein Fluidausgang der Fluidqualitätseinheit innerhalb des Nahbereichs angeordnet ist. Erfindungsgemäß sind zumindest sämtliche fluidführenden Komponenten und/oder Fluidkanäle und/oder Fluidpfade der Fluidqualitätseinheit in dem Nahbereich angeordnet. Insbesondere ist jedoch denkbar, dass Komponenten der Fluidqualitätseinheit, die kein Fluid führen, wie beispielsweise eine Energieversorgung und/oder eine Steuereinheit und/oder ein Gehäuse oder dergleichen außerhalb des Nahbereichs angeordnet sind. Insbesondere ist ein Leitungsweg und/oder ein Fluidflussweg von der Fluidqualitätseinheit, insbesondere von einem Fluidausgang der Fluidqualitätseinheit, bis zu der Zelleneinheit, insbesondere bis zu einem Eingang der Zelleneinheit, kleiner als 2 m, vorzugsweise kleiner als 1 m und besonders bevorzugt kleiner als 0,5 m. Vorzugsweise ist zumindest ein fluidführender Teil der Fluidqualitätseinheit von einer Fluidleitung verschieden. Besonders bevorzugt sind ein in Flussrichtung vorderster und/oder ein in Flussrichtung hinterster Teil, insbesondere des fluidführenden Teils, der Fluidqualitätseinheit fluidaufbereitende Komponenten und/oder Sensorkomponenten und/oder unmittelbar damit verbundene Anschlüsse, jedoch vorteilhaft keine Fluidleitungen. Insbesondere ist die Fluidqualitätseinheit in Flussrichtung hinter einer Pumpe der Fluidversorgung und/oder hinter einem Fluidreservoir der Fluidversorgung und vor der Zelleneinheit angeordnet.

In einer vorteilhaften Ausgestaltung der Erfindung wird vorgeschlagen, dass die Fluidqualitätseinheit zumindest eine Entsalzungseinheit, insbesondere einen lonentauscher, aufweist. Es ist denkbar, dass die Entsalzungseinheit zu einer Entsalzung des Fluids mittels zumindest einer Destillation, zumindest eines Filterns oder dergleichen vorgesehen ist. Insbesondere kann die Entsalzungseinheit mehrere Destillationsstufen umfassen. Vorteilhaft ist die Entsalzungseinheit als ein lonentauscher ausgebildet. Insbesondere ist der lonentauscher in dem Normalbetriebszustand von dem Fluid durchströmt, vorzugsweise vor einem Eintritt des Fluids in die Zelleneinheit. Vorzugsweise ist der lonentauscher zu einer zumindest teilweisen Entsalzung des Fluids vorgesehen. Besonders bevorzugt ist der lonentauscher ein Wasserentsalzungsionentauscher. Insbesondere kann der lonentauscher mehrere Austauscher aufweisen, beispielsweise zumindest einen Gleichstromaustauscher und/oder zumindest einen Gegenstromaustauscher und/oder zumindest einen Mischbettaustauscher und/oder zumindest einen Kationenaustauscher und/oder zumindest einen Anionenaustauscher. Vorteilhaft umfasst der Ionenaustauscher zumindest eine Entsalzungsstraße. Besonders vorteilhaft ist die Entsalzungseinheit dazu vorgesehen, eine Entsalzung von Wasser derart durchzuführen, dass eine elektrische Leitfähigkeit des Wassers weniger als 0,1 µS/cm beträgt. Hierdurch kann vorteilhaft eine hohe Fluidqualität erzielt und/oder aufrechterhalten werden.

In einer besonders vorteilhaften Ausgestaltung der Erfindung wird vorgeschlagen, dass die Fluidqualitätseinheit zumindest einen Partikelfilter aufweist. Vorzugsweise ist der Partikelfilter in Flussrichtung hinter der Entsalzungseinheit angeordnet. Es ist auch denkbar, dass der Partikelfilter in Flussrichtung vor der Entsalzungseinheit angeordnet ist. Bevorzugt ist der Partikelfilter unmittelbar mit einem Fluidausgang der Fluidqualitätseinheit verbunden und/oder bildet diesen zumindest teilweise aus. Besonders bevorzugt ist der Partikelfilter in Flussrichtung unmittelbar vor der Zelleneinheit angeordnet. Insbesondere kann der Partikelfilter zumindest einen Mikrofilter und/oder zumindest einen Ultrafilter umfassen. Bevorzugt ist der Partikelfilter ein Membranfilter und/oder ein Porenfilter, wobei beliebige geeignete Arten von Partikelfiltern denkbar sind. Hierdurch können vorteilhaft Verunreinigungen einer Zelleneinheit, insbesondere aufgrund von Schwebstoffen und/oder Partikeln, verhindert werden.

Zudem wird vorgeschlagen, dass ein Leitungsweg, insbesondere der Fluidversorgung, von der Fluidqualitätseinheit, insbesondere von deren Fluidausgang und/oder von dem Partikelfilter und/oder von der Entsalzungseinheit, zu der Zelleneinheit eine Länge von höchstens 2 m, vorteilhaft von höchstens 1,5 m, besonders vorteilhaft von höchstens 1 m, bevorzugt von höchstens 0,5 m und besonders bevorzugt von höchstens 0,3 m aufweist. Insbesondere fließt in dem Normalbetriebszustand das Fluid von der Fluidqualitätseinheit, insbesondere unmittelbar, in den Leitungsweg und/oder von dem Leitungsweg, insbesondere unmittelbar, in die Zelleneinheit. Hierdurch kann vorteilhaft eine Aufreinigung eines Fluids möglichst unmittelbar vor dessen Eintritt in die Zelleneinheit erfolgen, wodurch vorteilhaft Verschmutzungen aufgrund eines Fließens durch lange Leitungspfade vermieden wird.

Die erfindungsgemäße Elektrochemievorrichtung weist eine Überwachungseinheit auf, die zumindest einen Fluidqualitätssensor aufweist. Der Fluidqualitätssensor ist zur zumindest indirekten Ermittlung und/oder zur zumindest indirekten Messung zumindest eines Fluidqualitätsparameters vorgesehen. Hierdurch kann vorteilhaft eine Fludiqualität zuverlässig und/oder präzise bestimmt und/oder überwacht werden. Es ist denkbar, dass die Überwachungseinheit und die Fluidqualitätseinheit zumindest teilweise einteilig ausgebildet sind. Vorzugsweise umfasst die Überwachungseinheit zumindest eine Rechen- und/oder Steuer- und/oder Regeleinheit, die insbesondere mit der Steuer-und/oder Regeleinheit der Fluidqualitätseinheit einteilig ausgebildet sein kann. Besonders bevorzugt ist die Rechen- und/oder Steuer- und/oder Regeleinheit der Überwachungseinheit mit dem Fluidqualitätssensor verbunden und/oder zur Verarbeitung zumindest eines Sensorsignals des Fluidqualitätssensors und/oder des Fluidqualitätsparameters vorgesehen. Es ist denkbar, dass die Rechen- und/oder Steuer-und/oder Regeleinheit der Überwachungseinheit dazu vorgesehen ist, den Fluidqualitätsparameter anhand des Sensorsignals zu berechnen. Vorzugsweise ist der Fluidqualitätssensor zu einer wiederholten Ermittlung und/oder Messung des Fluidqualitätsparameters vorgesehen, insbesondere in wählbaren und/oder vorgegebenen Zeitabständen, beispielsweise mehrmals pro Stunde und/oder mehrmals pro Minute und/oder mehrmals pro Sekunde. Es ist denkbar, dass der Fluidqualitätssensor zu einer Echtzeitmessung des Fluidqualitätsparameters vorgesehen ist. Vorzugsweise ist die Überwachungseinheit zu einer Überwachung des Fluidqualitätsparameters vorgesehen.

In einer weiteren Ausgestaltung der Erfindung wird vorgeschlagen, dass der Fluidqualitätssensor in Flussrichtung hinter der Entsalzungseinheit angeordnet ist. Insbesondere ist der Fluidqualitätssensor zwischen der Entsalzungseinheit und dem Partikelfilter angeordnet. Insbesondere weist der Fluidqualitätssensor zumindest einen Durchflussbereich für zumindest einen Teilstrom des Fluids auf. Es ist denkbar, dass der Fluidqualitätssensor in dem Normalbetriebszustand von einem Gesamtfluidstrom durchflossen ist. Hierdurch kann vorteilhaft eine hohe Präzision einer Bestimmung einer Fluidqualität vor einem Eintritt des Fluids in die Zelleneinheit erzielt werden. Insbesondere kann hierdurch ein Überschätzen einer Fluidqualität von in die Zelleneinheit eintretendem Fluid vermieden werden.

In einer vorteilhaften Ausgestaltung der Erfindung wird vorgeschlagen, dass der Fluidqualitätsparameter eine elektrische Leitfähigkeit des Fluids ist. Hierdurch kann eine Fluidqualität, insbesondere eine Qualität in Bezug auf eine Entsalzung und/oder eine niedrige lonenkonzentration, schnell und/oder zuverlässig gemessen werden. Insbesondere ist der Fluidqualitätssensor ein Leitfähigkeitssensor. Es ist alternativ oder zusätzlich auch denkbar, dass der Fluidqualitätsparameter eine lonenkonzentration und/oder eine Konzentration von Partikeln und/oder eine Verunreinigung und/oder eine Brechzahl und/oder zumindest ein Teil eines Gaschromatogramm und/oder eine optische Dichte oder dergleichen ist.

Vorteilhaft ist die Fluidqualitätseinheit dazu vorgesehen, zumindest in dem Normalbetriebszustand das Fluid, insbesondere Wasser, mit einer elektrischen Leitfähigkeit von höchstens 0,5 µS/cm, vorteilhaft von höchstens 0,3 µS/cm, besonders vorteilhaft von höchstens 0,1 µS/cm und bevorzugt von höchstens 0,05 µS/cm bereitzustellen. Hierdurch kann eine hohe Fluidqualität und insbesondere ein zuverlässiger Betrieb und/oder eine große Lebensdauer erzielt werden.

Die erfindungsgemäße Überwachungseinheit ist dazu vorgesehen, in zumindest einem Fehlerbetriebszustand zumindest einen Betriebsparameter der Zelleneinheit und/oder der Fluidversorgung in Abhängigkeit von dem Fluidqualitätsparameter anzupassen. Vorteilhaft ist die Überwachungseinheit, insbesondere deren Rechen- und/oder Steuer- und/oder Regeleinheit, dazu vorgesehen, einen Istwert des Fluidqualitätsparameters mit einem Sollwert und/oder mit einem oberen und/oder unteren Grenzwert zu vergleichen. Beispielsweise kann die Überwachungseinheit dazu vorgesehen sein, den Fehlerbetriebszustand anhand eines Überschreitens und/oder eines Unterschreitens des Grenzwerts durch den Fluidqualitätsparameter zu erkennen. Vorteilhaft ist die Überwachungseinheit dazu vorgesehen, den Fehlerbetriebszustand anhand einer zu hohen elektrischen Leitfähigkeit des Fluids zu erkennen. Vorzugsweise ist die Überwachungseinheit zu einer Steuerung und/oder Regelung des Betriebsparameters der Zelleneinheit und/oder der Fluidversorgung zumindest in dem Fehlerbetriebszustand vorgesehen. Es ist denkbar,
dass die Überwachungseinheit zu einer Anpassung des Betriebsparameters in Abhängigkeit von einer Ausprägung des Fehlerbetriebszustands und/oder in Abhängigkeit von dem Fluidqualitätsparameter vorgesehen ist. Beispielsweise kann die Überwachungseinheit dazu vorgesehen sein, den Betriebsparameter für einen bestimmten ersten Fehlerbetriebszustand auf einen bestimmten ersten Wert und für einen bestimmten anderen zweiten Fehlerbetriebszustand auf einen bestimmten zweiten Wert zu setzen und/oder zu regeln. Vorzugsweise ist die Überwachungseinheit dazu vorgesehen, in dem Fehlerbetriebszustand den Fluidqualitätsparameter wiederholt zu überprüfen und insbesondere bei einer Rückkehr des Fluidqualitätsparameters in einen Sollbereich in einen Normalbetriebsmodus zurückzukehren und vorteilhaft die Zelleneinheit entsprechend anzusteuern und/oder den Betriebsparameter entsprechend anzupassen. Hierdurch kann vorteilhaft flexibel auf auftretende Fehler reagiert werden. Zudem kann hierdurch eine Beschädigung einer Zelleneinheit durch auftretende Fehler, insbesondere durch verschmutztes und/oder zu salziges und/oder zu saures und/oder zu basisches Wasser, vermieden werden.

In einer vorteilhaften Ausgestaltung der Erfindung wird vorgeschlagen, dass die Überwachungseinheit dazu vorgesehen ist, eine Betriebsleistung und/oder einen Betriebsstrom und/oder eine Betriebsspannung der Zelleneinheit zu steuern und/oder zu regeln, insbesondere in dem Fehlerbetriebszustand und/oder in Abhängigkeit von dem Fluidqualitätsparameter. Beispielsweise ist denkbar, dass die Überwachungseinheit für den Fall, dass der Fluidqualitätsparameter einen Grenzwert über- oder unterschreitet dazu vorgesehen ist, die Betriebsleistung auf einen reduzierten Wert einzustellen und/oder die Zelleneinheit vollständig herunterzufahren und/oder zumindest vorübergehend stillzulegen. Zudem ist denkbar, dass der Grenzwert in Abhängigkeit von einer Benutzereinstellung und/oder in Abhängigkeit von zumindest einem weiteren Parameter wie beispielsweise einem Umgebungsparameter und/oder einem Zellenparameter wie einer Temperatur, einer Einzelleistung, einer Luftfeuchtigkeit, einer Betriebsdauer, einem Gasfluss oder dergleichen festgelegt ist. Es ist auch denkbar, dass die Überwachungseinheit beispielsweise bei einem Hochfahren der Zelleneinheit und/oder bei einer Rückkehr in einen Normalbetriebszustand nach einem Fehlerbetriebszustand die Betriebsleistung auf einen im Vergleich zu einer Normalbetriebsleistung in dem Normalbetriebszustand, beispielsweise auf ein Zehntel oder auf ein Fünftel oder auf die Hälfte oder auf einen beliebigen anderen, insbesondere auch zeitlich veränderlichen, reduzierten Wert einstellt, insbesondere solange, bis der Fluidqualitätsparameter sich innerhalb eines Sollbereichs befindet und/oder einen Sollwert aufweist. Hierdurch kann vorteilhaft die Zelleneinheit an eine Fluidqualität und/oder an äußere Bedingungen angepasst betrieben werden.

Erfindungsgemäß ist die Überwachungseinheit dazu vorgesehen, eine Durchflussmenge des Fluids durch die Zelleneinheit zu steuern und/oder zu regeln. Hierbei ist eine Steuerung und/oder Regelung analog zu einer Steuerung und/oder Regelung der Betriebsleistung durch die Überwachungseinheit denkbar. Insbesondere ist die Überwachungseinheit dazu vorgesehen, die Durchflussmenge zumindest vorübergehend, insbesondere um wenigstens 20 %, vorteilhaft um wenigstens 50 % und besonders vorteilhaft um wenigstens 80 %, zu reduzieren und/oder auf Null zu setzen, insbesondere in dem Fehlerbetriebszustand und/oder bei einem Hochfahren und/oder Herunterfahren und/oder zumindest vorübergehenden Stilllegen der Zelleneinheit. Hierdurch kann vorteilhaft bei einer Detektion verschmutzten Fluids eine Beschädigung der Zelleneinheit vermieden werden.

Zudem wird vorgeschlagen, dass die erfindungsgemäße Fluidversorgung zumindest einen wahlweise durchströmbaren Umgehungspfad für die Zelleneinheit aufweist. Insbesondere ist der Umgehungspfad als eine Bypass-Leitung ausgebildet. Vorzugsweise weist die Fluidversorgung zumindest ein, insbesondere unmittelbar, vor der Zelleneinheit angeordnetes Umschaltventil und/oder zumindest ein, insbesondere unmittelbar, hinter der Zelleneinheit angeordnetes weiteres Umschaltventil auf. Vorzugsweise ist mittels des Umschaltventils und des weiteren Umschaltventils zumindest ein Umschalten zwischen zumindest einem Normalbetriebspfad, der durch die Zelleneinheit führt, und dem Umgehungspfad möglich. Vorzugsweise ist die Überwachungseinheit dazu vorgesehen, eine Durchströmung des Umgehungspfads zu steuern und/oder zu regeln, insbesondere mittels einer Ansteuerung des Umschaltventils und/oder des weiteren Umschaltventils. Beispielsweise kann die Überwachungseinheit dazu vorgesehen sein, in dem Fehlerbetriebszustand ein Umschalten auf den Umgehungspfad auszulösen, sodass vorteilhaft verschmutztes Fluid und/oder Fluid mit einem kritischen Fluidqualitätsparameter an der Zelleneinheit vorbeigeführt werden kann. Alternativ oder zusätzlich ist denkbar, dass während eines Hochfahrens und/oder während eines Herunterfahrens und/oder während einer Inbetriebnahme, insbesondere einer Erstinbetriebnahme, der Zelleneinheit das Fluid zumindest teilweise, vorzugsweise vollständig, durch den Umgehungspfad geleitet wird. Es ist denkbar, dass das Umschaltventil und/oder das weitere Umschaltventil als ein Proportionalventil ausgebildet ist. Insbesondere in diesem Fall ist denkbar, dass die Überwachungseinheit dazu vorgesehen ist, die Durchflussmenge des Fluids durch die Zelleneinheit mittels eines Anpassens eines Durchflusses durch den Umgehungspfad zu steuern und/oder zu regeln, wobei sich vorteilhaft ein Durchfluss durch die Zelleneinheit und ein Durchfluss durch den Umgehungspfad zu einem Gesamtfluss des Fluids addieren. Hierdurch kann vorteilhaft ein Durchfluss durch die Zelleneinheit in vielfältiger Weise angepasst werden, insbesondere im Fall einer niedrigen Fluidqualität und/oder während eines Hoch-und/oder Herunterfahrens der Zelleneinheit.

Vorteilhafte Eigenschaften hinsichtlich einer Zuverlässigkeit und/oder eines komponentenschonenden Betriebs können insbesondere mit einem Elektrolyseur, vorzugsweise mit einem Polymerelektrolytmembran-Elektrolyseur, mit zumindest einer erfindungsgemäßen Elektrochemievorrichtung erzielt werden.

Zudem geht die Erfindung aus von einem Verfahren zum Betrieb einer Elektrochemievorrichtung, insbesondere einer Elektrolysevorrichtung, insbesondere einer Polymerelektrolytmembran-Elektrolysevorrichtung, mit zumindest einer Zelleneinheit, die zumindest eine elektrochemische Zelle umfasst, wobei die Zelleneinheit, insbesondere zumindest in dem Normalbetriebszustand und/oder in einem aktiven Zustand der Zelleneinheit, mit zumindest einem fließenden Fluid versorgt wird.

Es wird vorgeschlagen, dass das Fluid vor einem Eintritt in die Zelleneinheit in einem Nahbereich der Zelleneinheit zumindest teilweise aufbereitet wird. Alternativ oder zusätzlich wird vorgeschlagen, dass das Fluid unmittelbar vor einem Eintritt in die Zelleneinheit zumindest teilweise aufbereitet wird.

Durch das erfindungsgemäße Verfahren kann vorteilhaft eine hohe Zuverlässigkeit erzielt werden. Zudem kann ein, insbesondere dauerhaft abrufbarer, vorteilhaft hoher Wirkungsgrad erzielt werden. Weiterhin kann eine Qualität eines Versorgungsfluids, insbesondere eines Wassers einer Wasserversorgung, für eine Elektrochemievorrichtung in vorteilhafter Weise erhöht werden. Insbesondere können Ausfälle und/oder Beschädigungen und/oder Leistungseinbußen oder dergleichen, beispielsweise aufgrund von Verschmutzungen und/oder Korrosion und/oder Akkumulation schwer löslicher Salze oder dergleichen vermieden werden. Vorzugsweise kann eine Elektrochemievorrichtung bereitgestellt werden, die im Fall plötzlich und/oder unvorhergesehen auftretender Verschmutzungen sicher und/oder beschädigungsfrei weiterbetrieben werden können. Zudem kann eine hohe Zuverlässigkeit hinsichtlich einer Betriebszustandsüberwachung erzielt werden. Außerdem können vorteilhaft Verschmutzungen, die aufgrund eines länger andauernden Ruhemodus einer Elektrochemievorrichtung auftreten können, insbesondere eines Elektrolysestacks, vermieden werden.

In einer Ausgestaltung, welche nicht Teil der beanspruchten Erfindung ist wird vorgeschlagen, dass die Zelleneinheit in zumindest einem inaktiven Zustand der Zelleneinheit mit dem fließenden Fluid versorgt wird. Hierdurch können vorteilhaft Verschmutzungen, beispielsweise aufgrund lange stehenden Kühlwassers, vermieden werden. Insbesondere umfasst der inaktive Zustand zumindest einen Standby-Modus und/oder zumindest einen abgeschalteten Zustand der Zelleneinheit. Vorzugsweise wird die Zelleneinheit nach einem Abschalten und/oder nach einem Wechsel in den Standby-Modus und/oder nach einem Herunterfahren zumindest vorübergehend, beispielsweise für wenigstens eine Minute oder für wenigstens fünf Minuten oder für wenigstens zehn Minuten oder für wenigstens 15 Minuten oder für wenigstens 30 Minuten oder für wenigstens eine Stunde oder für wenigstens zwei Stunden oder noch länger mit dem fließenden Fluid versorgt. Es ist auch denkbar, dass die Zelleneinheit permanent und/oder in regelmäßigen Abständen für einen bestimmten Zeitraum, pulsartig, mit dem fließenden Fluid versorgt wird, insbesondere bis zu einem Hochfahren und/oder bis zu einem Wechsel von dem Standby-Modus in einen Normalbetriebszustand und/oder bis zu einem Hochfahren. Es ist auch denkbar, dass das Fluid in dem inaktiven Zustand der Zelleneinheit in der Zelleneinheit abwechselnd steht und fließt, wobei entsprechende Zeitspannen beliebig wählbar sind, sodass beispielsweise für ein Umpumpen benötigte Energie reduziert und/oder ein Auftreten von Verunreinigungen aufgrund stehenden Wassers vermieden werden kann.

Alternativ oder zusätzlich ist denkbar, dass in zumindest einem inaktiven Zustand der Zelleneinheit, beispielsweise bei einer Wartung der Zelleneinheit und/oder bei einer Erweiterung einer Zellenzahl der Zelleneinheit oder dergleichen das Fluid durch den Umgehungspfad geführt wird und somit vorteilhaft eine Fluidqualität verbessert und/oder aufrechterhalten wird, insbesondere im Vergleich zu einem vollständigen Abschalten einer Fluidzirkulation.

Die erfindungsgemäße Elektrochemievorrichtung und das erfindungsgemäße Verfahren sollen hierbei nicht auf die oben beschriebenen Anwendungen und Ausführungsformen beschränkt sein. Insbesondere können die erfindungsgemäße Elektrochemievorrichtung und das erfindungsgemäße Verfahren zu einer Erfüllung einer hierin beschriebenen Funktionsweise eine von einer hierin genannten Anzahl von einzelnen Elementen und/oder Bauteilen und/oder Einheiten und/oder Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Elektrolyseur mit einer Elektrochemievorrichtung in einer schematischen Darstellung und
- Fig. 2: ein schematisches Ablaufdiagramm eines Verfahrens zum Betrieb der Elektrochemievorrichtung.

### Beschreibung der Ausführungsbeispiele

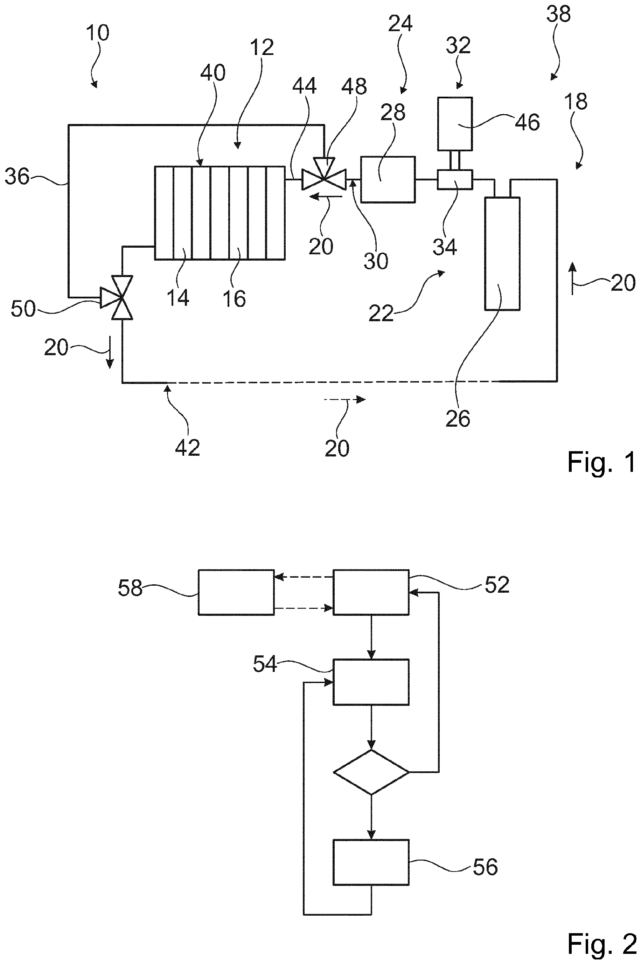

Die Figur 1 zeigt einen Elektrolyseur 38 mit einer Elektrochemievorrichtung 10 in einer schematischen Darstellung. Der Elektrolyseur 38 ist im vorliegenden Fall als ein Polymerelektrolytmembran-Elektrolyseur ausgebildet. Der Elektrolyseur 38 ist in der Figur 1 nur teilweise dargestellt und kann weitere Komponenten wie beispielsweise ein Gehäuse, Gasanschlüsse, eine Energieversorgung und/oder entsprechende Anschlüsse, ein Display, eine Recheneinheit und dergleichen mehr aufweisen. Im vorliegenden Fall ist die Elektrochemievorrichtung 10 als eine Elektrolysevorrichtung ausgebildet. Insbesondere ist die Elektrochemievorrichtung 10 als eine Polymerelektrolytmembran-Elektrolysevorrichtung ausgebildet. Wie oben beschrieben ist aber auch denkbar, dass die Elektrochemievorrichtung 10 als eine Brennstoffzellenvorrichtung, eine Galvanisierungsvorrichtung, eine Messvorrichtung oder dergleichen ausgebildet und/oder zumindest ein Teil eines entsprechenden Geräts und/oder einer entsprechenden Maschine ist.

Die Elektrochemievorrichtung 10 weist eine Zelleneinheit 12 auf. Die Zelleneinheit 12 weist zumindest eine elektrochemische Zelle 14, 16 auf. Im vorliegenden Fall weist die Zelleneinheit 12 eine Vielzahl von elektrochemischen Zellen 14, 16 auf, von denen aus Gründen einer Übersichtlichkeit nur zwei mit Bezugszeichen versehen sind. Zudem ist eine Anzahl an in der Figur 1 gezeigten elektrochemischen Zellen 14, 16 rein schematisch zu verstehen. Beispielsweise kann die Zelleneinheit 12 20 oder 30 oder 50 oder 100 oder 150 oder noch mehr elektrochemische Zellen 14, 16 umfassen oder selbstverständlich eine beliebige kleinere, größere oder zwischen diesen Werten liegende Anzahl. Die elektrochemischen Zellen 14, 16 sind als Elektrolysezellen ausgebildet, wobei selbstverständlich andere Arten elektrochemischer Zellen denkbar sind, analog zu den möglichen Ausprägungen der Elektrochemievorrichtung 10. Im vorliegenden Fall sind die elektrochemischen Zellen 14, 16 Teil eines Zellenstapels 40. Der Zellenstapel 40 ist ein Elektrolyse-Stack. Weiterhin sind die elektrochemischen Zellen 14, 16 im vorliegenden Fall als Zellenstapelzellen ausgebildet, wobei diese beispielsweise wie oben beschrieben aufgebaut sein können. Insbesondere können die elektrochemischen Zellen 14, 16, vorzugsweise jeweils mehrere Zellenstapelelemente umfassen.

Die Elektrochemievorrichtung 10 weist eine Fluidversorgung 18 auf. Die Fluidversorgung 18 ist zur Versorgung der Zelleneinheit 12 mit zumindest einem in zumindest eine Flussrichtung 20 fließenden Fluid geeignet und insbesondere vorgesehen. Im vorliegenden Fall ist das Fluid Wasser, insbesondere hochreines und/oder deionisiertes Wasser. Insbesondere fungiert das Fluid als Kühlmittel und/oder als Ausgangsstoff für zumindest eine elektrochemische Reaktion, im vorliegenden Fall eine elektrolytische Wasserspaltung zu Wasserstoff und Sauerstoff. Je nach Ausprägung der Elektrochemievorrichtung 10 sind aber selbstverständlich beliebige andere Fluide denkbar, die, insbesondere auch lediglich, als Wärmetransportmittel und/oder als Reaktionsedukt und/oder als Reaktionsprodukt und/oder als Katalysator oder dergleichen fungieren können. Die Fluidversorgung 18 kann zusätzlich zu den in der Figur 1 dargestellten Komponenten weitere Teile und/oder Elemente aufweisen, beispielsweise zumindest eine Pumpe und/oder zumindest ein Fluidreservoir und/oder entsprechende Fluidleitungen. Vorzugsweise umfasst die Fluidversorgung 18 zumindest einen geschlossenen Fluidkreislauf 42, der, insbesondere wahlweise, in zumindest einem Normalbetriebszustand der Zelleneinheit 12 durch die Zelleneinheit 12 führt. Der Fluidkreislauf 42 kann dabei von nicht gezeigten Leitungs- und/oder Funktionskomponenten der Fluidversorgung 18 zumindest teilweise ausgebildet sein. Es ist aber auch denkbar, dass die Fluidversorgung 18 zur Einbindung in einen entsprechenden geschlossenen Fluidkreislauf 42 vorgesehen ist und einen Teil desselben ausbildet. Die Fluidversorgung 18 kann in diesem Fall zur Verbindung mit externen Fluidversorgungskomponenten wie beispielsweise Wasseranschlüssen und/oder einem externen Fluidversorgungssystem vorgesehen sein. Die Zelleneinheit 12 bildet im vorliegenden Fall einen Teil des Fluidkreislaufs 42 aus, beispielweise in Form von nicht gezeigten Kanälen durch die elektrochemischen Zellen 14, 16 und/oder durch den Zellenstapel 40. Die Flussrichtung 20 ändert sich im vorliegenden Fall entlang des Fluidkreislaufs 42. Insbesondere entspricht die Flussrichtung 20 an einer beliebigen Stelle des Fluidkreislaufs 42 stets einer Nettoflussrichtung des Fluids an dieser Stelle.

Die Fluidversorgung 18 weist eine Fluidqualitätseinheit 22 auf, die zu einer Aufbereitung des Fluids vorgesehen ist. Im vorliegenden Fall umfasst die Aufbereitung zumindest eine Erhöhung und/oder eine Aufrechterhaltung einer Fluidqualität, insbesondere einer Reinheit und/oder einer Entsalzung und/oder einer Partikelfreiheit oder dergleichen. Die Fluidqualitätseinheit 22 ist in Flussrichtung 20 vor der Zelleneinheit 12 zumindest teilweise in einem Nahbereich 24 der Zelleneinheit 12 angeordnet. Im vorliegenden Fall umfasst der Nahbereich 24 Punkte, die weniger als 3 m, vorteilhaft weniger als 2 m, bevorzugt weniger als 1 m und besonders bevorzugt weniger als 0,5 m von der Zelleneinheit 12, insbesondere von einem Zulauf 44, der Zelleneinheit 12 entfernt sind. Ferner sind im vorliegenden Fall alle fluidführenden Komponenten der Fluidqualitätseinheit 22 innerhalb des Nahbereichs 24 angeordnet. Es ist aber denkbar, dass Gehäuseelemente und/oder elektronische Komponenten und/oder ein Energieversorgung oder dergleichen der Fluidqualitätseinheit 22 außerhalb des Nahbereichs 24 angeordnet sind.

Die Fluidqualitätseinheit 22 weist zumindest eine Entsalzungseinheit 26 auf. Im vorliegenden Fall ist die Entsalzungseinheit 26 als ein lonentauscher ausgebildet, wobei, wie oben beschrieben, alternativ oder zusätzliche andere Entsalzungskomponenten denkbar sind. Im vorliegenden Fall umfasst die Entsalzungseinheit 26 mehrere Ionenaustauscher. Die Entsalzungseinheit 26 ist zudem im vorliegenden Fall dazu vorgesehen, Wasser soweit zu entsalzen, dass, zumindest bei einer Verwendung von vorentsalztem Wasser, elektrische Leitfähigkeiten von höchstens 0,1 µA/cm erzielbar sind. Insbesondere ist die Entsalzungseinheit 26 dazu vorgesehen, als letzte Stufe einer Entsalzungsinstallation, insbesondere für Wasser, zu fungieren.

Die Fluidqualitätseinheit 22 weist ferner zumindest einen Partikelfilter 28 auf, der in Flussrichtung 20 hinter der Entsalzungseinheit 26 angeordnet ist. Im vorliegenden Fall bildet der Partikelfilter 28 eine letzte Reinigungsstufe der Fluidqualitätseinheit 22 aus. Der Partikelfilter 28 kann beispielsweise einen Mikrofilter und/oder einen Ultrafilter umfassen und an zu erwartende Verschmutzungen und/oder an ein zu erwartendes Partikelvorkommen angepasst sein.

Ein Leitungsweg 30 von der Fluidqualitätseinheit 22, insbesondere von dem Partikelfilter 28, zu der Zelleneinheit 12 weist eine Länge von höchstens 2 m auf. Im vorliegenden Fall beträgt die Länge des Leitungswegs 30 etwa 0,5 m, wobei je nach Aufbau der Elektrochemievorrichtung 10 andere Werte denkbar sind. Insbesondere aufgrund der kleinen Länge des Leitungswegs 30 können nach einer Reinigung des Fluids in der Fluidqualitätseinheit 22 hinzukommende Verunreinigungen des Fluids vorteilhaft minimiert werden.

Die Elektrochemievorrichtung 10 weist eine Überwachungseinheit 32 auf, die zumindest einen Fluidqualitätssensor 34 aufweist, der zur zumindest indirekten Ermittlung zumindest eines Fluidqualitätsparameters vorgesehen ist. Der Fluidqualitätssensor 34 umfasst im vorliegenden Fall zumindest einen Leitfähigkeitsmesser. Der erfindungsgemäße Fluidqualitätssensor 34 ist zu einer automatisierten Messung des Fluidqualitätsparameters vorgesehen. Der Fluidqualitätsparameter ist eine elektrische Leitfähigkeit. Alternativ oder zusätzlich ist jedoch eine andere Art von Sensor denkbar, der beispielsweise eine Trübheit des Fluids und/oder einen anderen geeigneten Fluidqualitätsparameter ermittelt. Im vorliegenden Fall ist der Fluidqualitätssensor 34 in dem Fluidkreislauf 42 angeordnet. In dem Normalbetriebszustand wird der Fluidqualitätssensor 34 von dem Fluid durchströmt. Der Fluidqualitätssensor 34 ist dazu vorgesehen, den Fluidqualitätsparameter wiederholt zu ermitteln, beispielsweise mehrmals pro Minute. Zudem ist der Fluidqualitätssensor 34 mit einer Steuer- und/oder Regeleinheit 46 der Überwachungseinheit 32 verbunden. Die Steuer- und/oder Regeleinheit 46 weist eine entsprechende Recheneinheit auf und ist zu einer Verarbeitung des Fluidqualitätsparameters vorgesehen.

Der Fluidqualitätssensor 34 ist in Flussrichtung 20 hinter der Entsalzungseinheit 26 angeordnet. Im vorliegenden Fall ist der Fluidqualitätssensor 34 in Flussrichtung 20 vor dem Partikelfilter 28 angeordnet. Der Fluidqualitätssensor 34 ist zwischen der Entsalzungseinheit 26 und dem Partikelfilter 28 angeordnet. Des Weiteren ist der Fluidqualitätssensor 34 in die Fluidqualitätseinheit 22 integriert. Es ist jedoch ebenso eine separate Ausgestaltung denkbar. Ferner können die Überwachungseinheit 32 und die Fluidqualitätseinheit 22 zumindest teilweise einteilig oder auch vollständig getrennt voneinander ausgebildet sein. Es ist auch denkbar, dass der Fluidqualitätssensor 34 in Flussrichtung 20 hinter dem Partikelfilter 28 angeordnet ist. Insbesondere kann der Fluidqualitätssensor 34 unmittelbar vor dem Zulauf 44 der Zelleneinheit 12 angeordnet sein. Die in der Figur 1 gezeigte Anordnung der Fluidqualitätseinheit 22 und der Überwachungseinheit 32 stellt dabei lediglich eine exemplarische Möglichkeit einer Ausgestaltung dar.

In dem Normalbetriebszustand ist die Fluidqualitätseinheit 22 dazu vorgesehen, als Fluid Wasser mit einer elektrischen Leitfähigkeit von höchstens 0,5 µS/cm, im vorliegenden Fall von höchstens 0,1 µS/cm bereitzustellen. Die Überwachungseinheit 32 ist dabei dazu vorgesehen, die elektrische Leitfähigkeit des Fluids zu überwachen, um insbesondere größere Leitfähigkeiten, die beispielsweise auf eine erhöhte lonenkonzentration schließen lassen, zu erkennen.

Die Überwachungseinheit 32 ist dazu vorgesehen, in zumindest einem Fehlerbetriebszustand zumindest einen Betriebsparameter der Zelleneinheit 12 und/oder der Fluidversorgung 18 in Abhängigkeit von dem Fluidqualitätsparameter anzupassen. Im vorliegenden Fall ist die Überwachungseinheit 32 dazu vorgesehen, den Fehlerbetriebszustand anhand eines Istwert-Sollwert-Vergleichs des Fluidqualitätsparameters zu erkennen. Insbesondere wird ein Fehlerbetriebszustand von der Überwachungseinheit 32 erkannt, wenn der Fluidqualitätsparameter einen bestimmten Grenzwert überschreitet. Im vorliegenden Fall wird der Fehlerbetriebszustand erkannt, wenn mittels des Fluidqualitätssensors 34 eine elektrische Leitfähigkeit des Fluids gemessen wird, die größer ist als 0,1 µS/cm, wobei selbstverständlich beliebige andere größere oder kleinere Grenzwerte denkbar sind. Der Grenzwert ist im vorliegenden Fall in der Steuer- und/oder Regeleinheit 46 der Überwachungseinheit 32 hinterlegbar und/oder von einem Benutzer vorgebbar. Dabei kann der Grenzwert direkt vorgebbar sein oder beispielsweise im Rahmen einer Auswahl eines Betriebsmodus automatisch angepasst werden. Zudem ist denkbar, dass mehrere Grenzwerte und/oder Wertebereiche hinterlegt und/oder hinterlegbar sind, die bestimmten unterschiedlichen Fehlerbetriebszuständen entsprechen, beispielsweise einer unkritisch überhöhten Verschmutzung und einer kritisch überhöhten Verschmutzung des Fluids. Dabei ist denkbar, dass die Überwachungseinheit 32 dazu vorgesehen ist, in Abhängigkeit von einem Verschmutzungsgrad und/oder einer Art eines Fehlerbetriebszustands den Betriebsparameter und/oder unterschiedliche Betriebsparameter in unterschiedlicher Weise anzupassen. Ferner ist denkbar, dass der Betriebsparameter gemäß einer beispielsweise linearen und/oder inversen und/oder polynomischen und/oder exponentiellen oder beliebigen anderen Funktion des Fluidqualitätsparameters angepasst wird. Vorzugsweise ist die Steuer- und/oder Regeleinheit 46 dazu vorgesehen, den Betriebsparameter in dem Fehlerbetriebszustand auf einen Sollwert zu regeln und/oder einzustellen. Die Steuer- und/oder Regeleinheit 46 kann hierbei zumindest teilweise einteilig mit einer Kontrolleinheit der Elektrochemievorrichtung 10 und/oder der Zelleneinheit 12 ausgebildet sein.

Im vorliegenden Fall ist die Überwachungseinheit 32, insbesondere deren Steuer-und/oder Regeleinheit 46, dazu vorgesehen, eine Betriebsleistung der Zelleneinheit 12 zu steuern und/oder zu regeln. Insbesondere ist die Überwachungseinheit 32 dazu vorgesehen, in dem Fehlerbetriebszustand die Betriebsleistung zu reduzieren. Insbesondere ist dabei denkbar, dass bei einem Überschreiten des Grenzwerts die Betriebsleistung kontinuierlich reduziert und die Zelleneinheit 12 heruntergefahren wird. Es ist auch, insbesondere für einen Fall einer moderaten Verschmutzung, denkbar, dass die Zelleneinheit 12 zumindest zeitweise mit einer konstanten reduzierten Leistung betrieben wird, beispielsweise um Beschädigungen aufgrund einer Volllast bei zu stark ionenhaltigem Fluid zu vermeiden. Zudem ist denkbar, dass die Überwachungseinheit 32 dazu vorgesehen ist, die Betriebsleistung zu steigern, falls beispielsweise der Fluidqualitätsparameter aus einem kritischen Bereich in einen Sollbereich zurückkehrt, insbesondere für den Fall, dass eine elektrische Leitfähigkeit des Fluids wieder unterhalb des Grenzwerts liegt, nachdem sie diesen beispielsweise über einen bestimmten Zeitraum überschritten hatte.

Ferner ist die Überwachungseinheit 32, insbesondere deren Steuer- und/oder Regeleinheit 46, dazu vorgesehen, eine Durchflussmenge des Fluids durch die Zelleneinheit 12 zu steuern und/oder zu regeln. Beispielsweise kann die Überwachungseinheit 32 zur Ansteuerung zumindest eines Umschaltventils und/oder zumindest eines Proportionalventils und/oder zumindest einer Pumpe oder dergleichen vorgesehen sein. Insbesondere ist die Überwachungseinheit 32 dazu vorgesehen, die Durchflussmenge in dem Fehlerbetriebszustand zu reduzieren. Selbstverständlich ist denkbar, dass die Überwachungseinheit 32 im Gegensatz zu dem hier Beschriebenen lediglich zur Anpassung der Durchflussmenge oder lediglich zur Anpassung des Betriebsparameters vorgesehen ist.

Die erfindungsgemäße Fluidversorgung 18 weist zumindest einen wahlweise durchströmbaren Umgehungspfad 36 für die Zelleneinheit 12 auf. Der Umgehungspfad 36 ist derart dimensioniert, dass ein Gesamtfluidstrom anstatt durch die Zelleneinheit 12 durch den Umgehungspfad 36 fließen kann. Im erfindungsgemäßen Fall umfasst die Fluidversorgung 18 zumindest ein erstes Umschaltventil 48, welches in Flussrichtung 20 vor der Zelleneinheit 12 angeordnet ist, insbesondere zwischen dem Partikelfilter 28 und der Zelleneinheit 12. Zudem umfasst die erfindungsgemäße Fluidversorgung 18 zumindest ein zweites Umschaltventil 50, welches in Flussrichtung 20 hinter der Zelleneinheit 12 angeordnet ist. Zumindest das erste Umschaltventil 48 oder das zweite Umschaltventil 50 ist im vorliegenden Fall als Proportionalventil ausgebildet, wobei jedoch auch denkbar ist, dass beide Umschaltventile 48, 50 oder keines der Umschaltventile 48, 50 als Proportionalventil ausgebildet sind/ist. Mittels der Umschaltventile 48, 50 kann das Fluid zumindest teilweise an der Zelleneinheit 12 vorbei durch den Umgehungspfad 36 geführt werden. Insbesondere kann hierdurch eine Durchflussmenge durch die Zelleneinheit 12 reduziert und/oder auf Null gesetzt werden, beispielsweise in Abhängigkeit von einer Stellung des ersten Umschaltventils 48 und/oder des zweiten Umschaltventils 50. Im erfindungsgemäßen Fall ist die Überwachungseinheit 32 zu einer Ansteuerung der Umschaltventile 48, 50 vorgesehen. Insbesondere in dem Fehlerbetriebszustand schaltet die Überwachungseinheit 32 die Umschaltventile 48, 50 derart, dass wenigstens ein Teil des Fluids durch den Umgehungspfad 36 geführt wird. Es ist auch denkbar, dass die Überwachungseinheit 32 insbesondere reduziert werden. Beispielsweise können die Umschaltventile 48, 50 derart angesteuert werden, dass das Fluid zumindest teilweise oder vollständig durch den Umgehungspfad 36 geführt wird. Vorzugsweise wird zusätzlich die Betriebsleistung der Zelleneinheit 12 reduziert und/oder die Zelleneinheit 12 vorübergehend stillgelegt.

Vorzugsweise in regelmäßigen Zeitabständen wird wieder ein aktueller Fluidqualitätsparameter ermittelt und mit dem Sollbereich verglichen. Hierfür wird beispielsweise erneut der zweite Verfahrensschritt 54 durchgeführt. Das Fluid kann somit mittels der Fluidqualitätseinheit 22 gereinigt werden, während die Zelleneinheit 12 beispielsweise in einem Standby-Modus gehalten wird. Die Elektrochemievorrichtung 10 kann in einem derartigen Fehlerbetriebsmodus betrieben werden, bis der Fluidqualitätsparameter wieder einen Sollwert erreicht, woraufhin vorteilhaft zu dem ersten Verfahrensschritt 52 zurückgekehrt wird, indem beispielsweise die Umschaltventile 48, 50 entsprechend derart umgeschaltet werden, dass der Zelleneinheit 12 wieder Fluid zugeführt wird.

Zusätzlich oder alternativ kann das Verfahren zum Betrieb der Elektrochemievorrichtung 10 auch einen weiteren, nicht Teil der Erfindung darstellenden, Verfahrensschritt 58 beinhalten, in welchem die Zelleneinheit 12 in zumindest einem inaktiven Zustand der Zelleneinheit 12 mit dem Fluid versorgt wird, vorzugsweise wenn kein Fehlerbetriebszustand vorliegt. Dabei wird Fluid kontinuierlich oder phasenweise durch die Zelleneinheit 12 geleitet, während diese deaktiviert ist, sodass das Fluid nicht permanent in dem Fluidkreislauf 42 und in der Zelleneinheit 12 steht und insbesondere mittels der Fluidqualitätseinheit 22 gereinigt werden kann. Beispielsweise kann die Zelleneinheit 12 zumindest vorübergehend stillgelegt sein und/oder sich in einem Standby-Modus befinden. Es können dabei Ablagerungen und/oder Verunreinigungen der Zelleneinheit 12 aufgrund eines stehenden Fluids vermieden werden. Zudem kann auf einen Fluidreinigungsschritt bei einem Hochfahren der Zelleneinheit 12 verzichtet werden, da der Fluidqualitätsparameter aufgrund eines Fließens des Fluids in einem Sollbereich gehalten werden kann insbesondere reduziert werden. Beispielsweise können die Umschaltventile 48, 50 derart angesteuert werden, dass das Fluid zumindest teilweise oder vollständig durch den Umgehungspfad 36 geführt wird. Vorzugsweise wird zusätzlich die Betriebsleistung der Zelleneinheit 12 reduziert und/oder die Zelleneinheit 12 vorübergehend stillgelegt. Vorzugsweise in regelmäßigen Zeitabständen wird wieder ein aktueller Fluidqualitätsparameter ermittelt und mit dem Sollbereich verglichen. Hierfür wird beispielsweise erneut der zweite Verfahrensschritt 54 durchgeführt. Das Fluid kann somit mittels der Fluidqualitätseinheit 22 gereinigt werden, während die Zelleneinheit 12 beispielsweise in einem Standby-Modus gehalten wird. Die Elektrochemievorrichtung 10 kann in einem derartigen Fehlerbetriebsmodus betrieben werden, bis der Fluidqualitätsparameter wieder einen Sollwert erreicht, woraufhin vorteilhaft zu dem ersten Verfahrensschritt 52 zurückgekehrt wird, indem beispielsweise die Umschaltventile 48, 50 entsprechend derart umgeschaltet werden, dass der Zelleneinheit 12 wieder Fluid zugeführt wird.

Zusätzlich oder alternativ kann das Verfahren zum Betrieb der Elektrochemievorrichtung 10 auch einen weiteren Verfahrensschritt 58 beinhalten, in welchem die Zelleneinheit 12 in zumindest einem inaktiven Zustand der Zelleneinheit 12 mit dem Fluid versorgt wird, vorzugsweise wenn kein Fehlerbetriebszustand vorliegt. Dabei wird Fluid kontinuierlich oder phasenweise durch die Zelleneinheit 12 geleitet, während diese deaktiviert ist, sodass das Fluid nicht permanent in dem Fluidkreislauf 42 und in der Zelleneinheit 12 steht und insbesondere mittels der Fluidqualitätseinheit 22 gereinigt werden kann. Beispielsweise kann die Zelleneinheit 12 zumindest vorübergehend stillgelegt sein und/oder sich in einem Standby-Modus befinden. Es können dabei Ablagerungen und/oder Verunreinigungen der Zelleneinheit 12 aufgrund eines stehenden Fluids vermieden werden. Zudem kann auf einen Fluidreinigungsschritt bei einem Hochfahren der Zelleneinheit 12 verzichtet werden, da der Fluidqualitätsparameter aufgrund eines Fließens des Fluids in einem Sollbereich gehalten werden kann.

## Patentansprüche

1. Elektrochemievorrichtung, insbesondere Elektrolysevorrichtung, insbesondere Polymerelektrolytmembran-Elektrolysevorrichtung, mit zumindest einer Zelleneinheit (12), die zumindest eine elektrochemische Zelle (14, 16) umfasst, und mit zumindest einer Fluidversorgung (18) zur Versorgung der Zelleneinheit (12) mit zumindest einem in zumindest eine Flussrichtung (20) fließenden Fluid, wobei die Fluidversorgung (18) zumindest eine Fluidqualitätseinheit (22) aufweist, die zu einer Aufbereitung des Fluids vorgesehen ist und die in Flussrichtung (20) vor der Zelleneinheit (12) angeordnet ist, **gekennzeichnet durch** eine Überwachungseinheit (32), die zumindest einen Fluidqualitätssensor (34) aufweist, der zu einer automatisierten Messung eines Fluidqualitätsparameters des Fluids vorgesehen ist, wobei die Überwachungseinheit (32) dazu vorgesehen ist, in zumindest einem Fehlerbetriebszustand zumindest eine Durchflussmenge des Fluids durch die Zelleneinheit (12) in Abhängigkeit von dem gemessenen Fluidqualitätsparameter des Fluids mittels eines Anpassens eines Durchflusses durch einen Umgehungspfad (36) der Fluidversorgung (18) zu steuern und/oder zu regeln, wobei die Fluidversorgung (18) zumindest ein erstes Umschaltventil (48), welches in Flussrichtung (20) vor der Zelleneinheit (12) angeordnet ist, und zumindest ein zweites Umschaltventil (50), welches in Flussrichtung (20) hinter der Zelleneinheit (12) angeordnet ist, umfasst, wobei die Überwachungseinheit (32) zu einer Ansteuerung der Umschaltventile (48, 50) vorgesehen ist, wobei zumindest alle fluidführenden Komponenten der Fluidqualitätseinheit (22) in einem Nahbereich (24) der Zelleneinheit (12) angeordnet sind, und wobei der Nahbereich (24) ein Bereich ist, dessen Punkte weniger als 3 m von der Zelleneinheit entfernt sind.

2. Elektrochemievorrichtung nach Anspruch 1, **dadurch gekennzeichnet, dass** die Fluidqualitätseinheit (22) zumindest eine Entsalzungseinheit (26), insbesondere einen lonentauscher, aufweist.

3. Elektrochemievorrichtung nach Anspruch 2, **dadurch gekennzeichnet, dass** die Fluidqualitätseinheit (22) zumindest einen Partikelfilter (28) aufweist, der in Flussrichtung (20) hinter der Entsalzungseinheit (26) angeordnet ist.

4. Elektrochemievorrichtung nach einem der vorhergehenden Ansprüche, **dadurch gekennzeichnet, dass** ein Leitungsweg (30) von der Fluidqualitätseinheit (22) zu der Zelleneinheit (12) eine Länge von höchstens 2 m, vorteilhaft von höchstens 0,5 m, aufweist

5. Elektrochemievorrichtung zumindest nach Anspruch 2, **dadurch gekennzeichnet, dass** der Fluidqualitätssensor (34) in Flussrichtung (20) hinter der Entsalzungseinheit (26) angeordnet ist.

6. Elektrochemievorrichtung nach Anspruch 5, **dadurch gekennzeichnet, dass** der Fluidqualitätsparameter eine elektrische Leitfähigkeit des Fluids ist.

7. Elektrochemievorrichtung nach einem der vorhergehenden Ansprüche, **dadurch gekennzeichnet, dass** die Überwachungseinheit (32) dazu vorgesehen ist, eine Betriebsleistung der Zelleneinheit (12) zu steuern und/oder zu regeln.

8. Elektrochemievorrichtung zumindest nach Anspruch 2, **dadurch gekennzeichnet, dass** die Entsalzungseinheit (26) dazu vorgesehen ist, eine Entsalzung von Wasser derart durchzuführen, dass eine elektrische Leitfähigkeit des als Wasser ausgebildeten Fluids weniger als 0,1 µS/cm beträgt.

9. Elektrolyseur mit zumindest einer Elektrochemievorrichtung (10) nach einem der vorhergehenden Ansprüche.

10. Verfahren zum Betrieb einer Elektrochemievorrichtung (10), nach einem der Ansprüche 1 bis 8, mit zumindest einer Zelleneinheit (12), die zumindest eine elektrochemische Zelle (14, 16) umfasst, wobei die Zelleneinheit (12) mit zumindest einem fließenden Fluid versorgt wird, **dadurch gekennzeichnet, dass** das Fluid vor einem Eintritt in die Zelleneinheit (12) in dem Nahbereich (24) der Zelleneinheit (12) zumindest teilweise aufbereitet wird.

## Claims

1. Electrochemical device, in particular electrolysis device, in particular polymer-electrolyte membrane electrolysis device,
with at least one cellular unit (12) comprising at least one electrochemical cell (14, 16)
and with at least one fluid supply (18) for a supply of the cellular unit (12) with at least one fluid that flows in at least one flow direction (20),
the fluid supply (18) comprising at least one fluid quality unit (22) that is configured for a treatment of the fluid and is arranged upstream of the cellular unit (12) in the flow direction (20),
**characterised by**
a monitoring unit (32) comprising at least one fluid quality sensor (34) which is configured for an automated measuring of a fluid quality parameter of the fluid, the monitoring unit (32) being configured to control and/or regulate in at least one fault state, depending on the measured fluid quality parameter of the fluid, at least a flow-through quantity of the fluid through the cellular unit (12) by an adaption of a flow rate through a bypass path (36) of the fluid supply (18),
the fluid supply (18) comprising at least one first switch valve (48) that is arranged upstream of the cellular unit (12) in the flow direction (20) and at least one second switch valve (50) that is arranged downstream of the cellular unit (12) in the flow direction (20),
wherein the monitoring unit (32) is configured for an actuation of the switch valves (48, 50),
wherein at least all fluid-conducting components of the fluid quality unit (22) are arranged in a proximity (24) of the cellular unit (12), the proximity (24) being a region whose points are distanced from the cellular unit by less than 3 m.

2. Electrochemical device according to claim 1,
**characterised in that** the fluid quality unit (22) comprises at least one desalination unit (26), in particular an ion exchanger.

3. Electrochemical device according to claim 2,
**characterised in that** the fluid quality unit (22) comprises at least one particle filter (28), which is arranged downstream of the desalination unit (26) in the flow direction (20).

4. Electrochemical device according one of the preceding claims,
**characterised in that** a conduit path (30) from the fluid quality unit (22) to the cellular unit (12) has a length of maximally 2 m, advantageously of maximally 0.5 m.

5. Electrochemical device at least according to claim 2,
**characterised in that** the fluid quality sensor (34) is arranged downstream of the desalination unit (26) in the flow direction (20).

6. Electrochemical device according to claim 5,
**characterised in that** the fluid quality parameter is an electrical conductivity of the fluid.

7. Electrochemical device according to one of the preceding claims,
**characterised in that** the monitoring unit (32) is configured for a control and/or regulation of an operational performance of the cellular unit (12).

8. Electrochemical device at least according to claim 2,
**characterised in that** the desalination unit (26) is configured to carry out a desalination of water in such a way that an electrical conductivity of the fluid that is embodied as water is less than 0.1 µS/cm.

9. Electrolyser with at least one electrochemical device (10) according to one of the preceding claims.

10. Method for an operation of an electrochemical device (10) according to one of claims 1 to 8, with at least one cellular unit (12) comprising at least one electrochemical cell (14, 16), the cellular unit (12) being supplied with at least one flowing fluid,
**characterised in that** the fluid, before entering the cellular unit (12), is at least partially treated in the proximity (24) of the cellular unit (12).

## Revendications

1. Dispositif électrochimique, en particulier dispositif d'électrolyse, en particulier dispositif d'électrolyse à membrane polymère-électrolyte,
avec au moins une unité cellulaire (12) comprenant au moins une cellule électrochimique (14, 16),
et avec au moins une alimentation en fluide (18) pour l'alimentation de l'unité cellulaire (12) d'au moins un fluide coulant en au moins une direction de flux (20), l'alimentation en fluide (18) comprenant au moins une unité de qualité-fluide (22) prévue pour un traitement du fluide et agencé avant l'unité cellulaire (12) en direction de flux (20),
**caractérisée par** une unité monitrice (32)
comportant au moins un capteur de qualité-fluide (34) prévu pour un mesurage automatisé d'un paramètre de qualité-fluide,
l'unité monitrice (32) étant prévue, dans au moins un état opératif de panne, à commander et/ou réguler, en dépendance au paramètre de qualité-fluide mesuré, au moins un débit de flux du fluide à travers de l'unité cellulaire (12) par une adaptation d'un débit par le biais d'un chemin de contournement,
l'alimentation de fluide (18) comprenant au moins une première soupape de commutation (48), disposée avant l'unité cellulaire (12) en direction de flux (20), et au moins une deuxième soupape de commutation (50), disposée derrière l'unité cellulaire (12) en direction de flux (20),
où l'unité monitrice (32) est configurée pour une actuation des soupapes de commutation (48, 50),
où au moins tous les composants de l'unité de qualité-fluide (22) quj conduisent de fluide sont disposés dans une proximité (24) de l'unité cellulaire (12), la proximité (24) étant une zone dont les points sont écartés de l'unité cellulaire par moins de 3 m.

2. Dispositif électrochimique selon la revendication 1,
**caractérisé en ce que** l'unité de qualité-fluide (22) comporte au moins une unité de dessalement (26), en particulier un échangeur d'ions.

3. Dispositif électrochimique selon la revendication 2,
**caractérisé en ce que** l'unité de qualité-fluide (22) comporte au moins un filtre à particules (28), qui est disposé derrière l'unité de dessalement (26) en direction de flux (20).

4. Dispositif électrochimique selon l'une quelconque des revendications précédentes,
**caractérisé en ce qu'**un chemin conducteur (30) de l'unité de qualité-fluide (22) à l'unité cellulaire (12) présente une longueur de maximalement 2 m, bénéfiquement pas plus de 0,5 m.

5. Dispositif électrochimique au moins selon la revendication 2,
**caractérisé en ce que** le capteur de qualité-fluide (34) est disposé derrière l'unité de dessalement (26) en direction de flux (20).

6. Dispositif électrochimique selon la revendication 5,
**caractérisé en ce que** le paramètre de qualité-fluide est une conductivité électrique du fluide.

7. Dispositif électrochimique selon l'une quelconque des revendications précédentes,
**caractérisé en ce que** l'unité monitrice (32) est configurée à commander et/ou réguler une performance opérationnelle de l'unité cellulaire (12).

8. Dispositif électrochimique au moins selon la revendication 2,
**caractérisé en ce que** l'unité de dessalement (26) est configurée à exécuter un dessalement d'eau de telle manière qu'une conductivité électrique du fluide implémenté comme de l'eau soit moins de 0,1 µS/cm.

9. Électrolyseur avec au moins un dispositif électrochimique (10) selon l'une quelconque des revendications précédentes.

10. Procédé de fonctionnement d'un dispositif électrochimique (10) selon l'une des revendications précédentes,
avec au moins une unité cellulaire (12) comprenant au moins une cellule électrochimique (14, 16),
l'unité cellulaire (12) étant alimentée d'au moins un fluide coulant, **caractérisé en ce que** le fluide, avant d'entrer dans l'unité cellulaire (12), est au moins partiellement traité dans la proximité (24) de l'unité cellulaire (12).
